(19) Europäisches Patentamt
European Patent Office
Office européen des brevets

(11) Publication number : **0 412 265 B1**

(12) **EUROPEAN PATENT SPECIFICATION**

(45) Date of publication of patent specification :
26.01.94 Bulletin 94/04

(51) Int. Cl.⁵ : **C09C 1/50**

(21) Application number : 90111909.9

(22) Date of filing : 22.06.90

(54) **Process and apparatus for producing carbon black.**

(30) Priority : 09.08.89 JP 204773/89

(43) Date of publication of application :
13.02.91 Bulletin 91/07

(45) Publication of the grant of the patent :
26.01.94 Bulletin 94/04

(84) Designated Contracting States :
DE FR GB

(56) References cited :
DE-A- 3 916 981

(73) Proprietor : MITSUBISHI KASEI
CORPORATION
5-2, Marunouchi 2-chome Chiyoda-ku
Tokyo 100 (JP)

(72) Inventor : Sakaue, Akinori, c/o Mitusbishi
Kasei Corporation
Kurosaki Kojo, 2447-1, Oaza Fujita,
Yahatanishi-ku
Kitakyushu-shi, Fukuoka-ken (JP)
Inventor : Shushichi, Yoshimura, c/o
Mitusbishi Kasei Corp.
Kurosaki Kojo, 2447-1, Oaza Fujita,
Yahatanishi-ku
Kitakyushu-shi, Fukuoka-ken (JP)
Inventor : Kanamaru, Shinichi, c/o Mitusbishi
Kasei Corp.
Kurosaki Kojo, 2447-1, Oaza Fujita,
Yahatanishi-ku
Kitakyushu-shi, Fukuoka-ken (JP)
Inventor : Karatsu, Masanori, c/o Mitusbishi
Kasei Corp.
5-2, Marunochi 2-chome, Chiyoda-ku
Tokyo (JP)

(74) Representative : Wächtershäuser, Günter, Dr.
Tal 29
D-80331 München (DE)

EP 0 412 265 B1

## Description

The present invention relates to a process and an apparatus for producing carbon blacks having various physical properties useful for applications as filler materials, reinforcing materials, conductive materials, coloring pigments, etc.

For producing furnace carbon black, it has been common to introduce an oxygen-containing gas and a fuel into a first reaction zone in the axial or tangential direction of a cylindrical carbon black production reactor, and while transferring the high temperature combustion gas formed by the combustion to a second reaction zone, introduce a hydrocarbon feedstock into the high temperature combustion gas stream to form carbon black. However, the thermal decomposition reaction of the hydrocarbon feedstock is complicated, and it has been difficult to form carbon black having desired physicochemical properties with high efficiency.

Especially, how to mix the high temperature combustion gas stream formed in the first reaction zone with the hydrocarbon feedstock in the second reaction zone for the formation of carbon balck, gives substantial influences over the yield and the properties (the types) of the resulting carbon black. Heretofore, it has been attempted to increase the kinetic energy by giving a strong swirling motion to the high temperature combustion gas, or by providing a throat of various shape in the third reaction zone as the reaction terminating zone. However, no adequately satisfactory process or apparatus for producing carbon black has been developed.

Japanese Examined Patent Publication No. 14684/1969 discloses a process and apparatus for producing carbon black, wherein the physical properties of the resulting carbon black are controlled by forming a combustion gas stream in the direction of the reactor axis (axial stream) and a combustion gas stream in the tangential direction (swirling stream). In this case, however, the meeting of the axial stream and the swirling stream is after the introduction of the hydrocarbon feedstock, whereby the turbulent flow energy created by the meeting of the two streams can not effectively be used for the reaction for the formation of carbon black.

Further, Japanese Unexamined Patent Publication No. 185762/1987 discloses a process for producing carbon black having a large surface area by introducing a hydrocarbon feedstock and an oxygen-containing gas from the axial direction of the reactor and at the same time introducing a swirling stream of a high temperature combustion gas from the outer circumference thereof. However, the meeting point of the axial combustion gas stream and the swirling combustion gas stream is located at the introduction point or down stream of the introduction point of the hydrocarbon feedstock, and the optimum turbulent flow is not formed in the region in the reactor where the hydrocarbon feedstock is introduced. Therefore, the turbulent flow energy obtained by the meeting of the two streams is not effectively utilized for the reaction for the formation of carbon black or for the control of the physical properties of the resulting carbon black. Furthermore, the introduction point of the hydrocarbon feedstock can not be controlled, whereby it is difficult to control the physical properties of the resulting carbon black.

It is an object of the present invention to provide a process and an apparatus for producing carbon black, whereby carbon blacks having desired various physicochemical properties and thus useful for various applications can be produced optionally and with high efficiency.

The present invention provides an process for producing carbon black by a reaction conducted in a first reaction zone in which by a high temperature combustion gas-generating system, an oxygen-containing gas and a fuel are mixed and burned to form a high temperature combustion gas stream, a second reaction zone having a throat in which a hydrocarbon feedstock is mixed to the high temperature combustion gas stream thus obtained, to form carbon black and a third reaction zone located down stream and continuous from the second reaction zone, in which quenching water is sprayed to terminate the reaction, which comprises:

(i) introducing into the first reaction zone said high temperature combustion gas stream in the form of two types of high temperature combustion gas streams i.e. a stream in the direction of the reactor axis (axial stream) and a stream in the tangential direction (tangential stream), and letting the two gas streams meet each other in the first reaction zone to form a composite stream of the high temperature combustion gas; and

(ii) in the second reaction zone, introducing the hydrocarbon feedstock to the composite stream of the high temperature combustion gas for reaction.

Further, the present invention provides an apparatus for producing carbon black, which comprises a first reaction zone in which by a high temperature combustion gas-generating system, an oxygen-containing gas and a fuel are mixed to form a high temperature combustion gas stream, a second reaction zone having a throat in which a hydrocarbon feedstock is mixed to the high temperature combustion gas stream thus obtained, to form carbon black, and a third reaction zone located down stream and continuous from the second reaction zone, in which quenching water is sprayed to terminate the reaction, wherein as said high temperature combustion gas-generating system, two types of high temperature combustion gas-generating systems i.e. a high temperature combustion gas-generating system for a stream in the direction of the reactor axis (axial stream) and a high temperature combustion gas-generating system for a stream in the tangential direction (tangential stream), are provided, so that the high temperature combustion gas axial stream and the high temperature combustion gas tangential stream formed by the two high temperature combustion gas-generating systems meet each other in the first reaction zone, and nozzles for introducing the hydrocarbon feedstock are provided in the second reaction zone.

In the accompanying drawings:

Figure 1 is a vertical cross sectional diagrammatical view of one embodiment of a carbon black production reactor of the present invention.

Figure 2 is a cross sectional view taken along line A-A in Figure 1.

Figure 3 is a cross sectional view taken along line B-B in Figure 1.

Figure 4 is a cross sectional view taken along line C-C in Figure 1.

Figure 5 is a cross sectional view taken along line D-D in Figure 1.

Figure 6-1 to 6-3 are vertical cross sectional diagrammatical views of other embodiments of the carbon black production reactor of the present invention.

Figures 7(a) and 7(b) are views illustrating different embodiments of the throat in the second reaction zone.

Figure 8-1 is a partial longitudinally cross sectional diagrammatical view of the second reaction zone illustrating another embodiment for the introduction of the hydrocarbon feedstock.

Figure 8-2 is a cross sectional view taken along line E-E in Figure 8-1.

The present inventors have conducted various experiments for the physical properties (quality) and the yield of the resulting carbon black in the reaction for the formulation of carbon black. As a result, it has been found that the efficiency of the reaction for the formation of carbon black and the physical properties of the product, largely depend on four factors i.e. the minimum value $(l_K)_{min}$ of the Kolmogorov eddy diameter $l_K$ formed in the the reactor, the distribution thereof, the proportion $(Q)l_{Kmin}/Q$ of the flow rate of the hydrocarbon feedstock passing through the region where $(l_K)_{min}$ exists, and the degree of dispersion of the hydrocarbon feedstock in the $(l_K)_{min}$ region.

Thus, it has been found that in order to control the physical properties of carbon black variously and to form the carbon black in good yield, it is necessary to control the absolute value of $(l_K)_{min}$ and its distribution and to control the proportion $(Q)l_{Kmin}/Q$ and the degree of dispersion of the hydrocarbon feedstock in the $(l_K)_{min}$ regions

Further, it has been found that in order to substantially change the absolute value of $(l_K)_{min}$ and its distribution, it is necessary to change the absolute value of the turbulent flow component in the reactor and its distribution, since the $l_K$ value is a function of the turbulent flow component as shown in the following equation.

$$l_k = \frac{lo}{\frac{l_o \times u'}{v}^{3/4}}$$

In the above equation, $l_o$, $u'$ and $v$ have the following meanings, respectively:

$l_o$:     Representative diameter

$u'$:     Turbulent flow velocity component

$v$:     Kinematic viscosity

Further, the average velocity u of the flow and its turbulent flow velocity component $u'$ are in a proportional relationship. Therefore, in order to substantially change the absolute value of $(l_K)_{min}$ and its distribution, it is necessary to substantially change the velocity distribution in the reactor.

Therefore, the present inventors have evaluated the flow distributions in the reactor and the turbulent flow components with respect to the axial stream flowing in the direction of the reactor axis and the tangential stream flowing in the tangential direction, by cold flow model experiments and numerical value analyzing simulation, to quantitatively determine such velocity distribution and turbulent flow velocity component. As a result, it has been ascertained that the axial stream has a peak of the turbulent flow velocity component at the center of the furnace and the tangential stream has a peak of the turbulent flow velocity component in the vicinity of the reactor wall, which is entirely different from the axial stream.

On the basis of these discoveries, in the present invention, the high temperature combustion gas stream formed by a high temperature combustion gas-generating system is introduced in the form of two types of streams i.e. the axial stream and the tangential stream, and the two streams are permitted to meet each other to form a composite stream in the first reaction zone. Then, in the second reaction zone, a hydrocarbon feedstock is introduced and reacted to the composite stream. In such a manner, it is possible to substantially change the turbulent flow velocity component i.e. the absolute value of $(l_K)_{min}$ and its distribution by changing the flow rate ratio of the axial flow component and the tangential flow component, whereby it is possible to optionally and easily control the physical properties (quality) of the resulting carbon black, such as the particle size, the particle size distribution, the aggregate size and the aggregate size distribution.

Further, the control of the proportion $(Q)|_{Kmin}/Q$ of the hydrocarbon feedstock passing through the $(I_K)_{min}$ region and the degree of dispersion of the hydrocarbon feedstock in the $(Q)|_{Kmin}$, can effectively be conducted by adding the control of the position and the manner of the introduction of the hydrocarbon feedstock in the second reaction zone to the control of the above-mentioned $(I_K)_{min}$ distribution.

Namely, it is usually preferred that the introduction of the hydrocarbon feedstock in the second reaction zone is conducted in a direction substantially traversing the reactor axis from the side. However, it is also possible to control the supply ratio of the hydrocarbon feedstock to the desired region and the degree of dispersion of the hydrocarbon feedstock by variously changing or controlling the positions of the hydrocarbon feedstock supply nozzles, the number of the nozzles or the angles of the supply nozzles.

As mentioned above, the introduction of the hydrocarbon feedstock is preferably conducted in a direction substantially traversing the reactor axis from the side of the second reaction zone. However, it is also possible to employ other methods for introduction. For example, there is a method in which the feedstock is introduced from the center of the reactor. According to such a method of introducing the feedstock from the center of the reactor, it is possible to change or control the degree of dispersion simply by changing the spouting angle of the hydrocarbon feedstock. Further, when the feedstock is introduced from the center of the reactor, it is possible to obtain a merit that a swirling flow can be supplied under an extremely stable condition.

In summary, according to the present invention, the high temperature combustion gas stream in the first reaction zone is introduced in the form of two types of streams i.e. the axial stream and the tangential stream, which are two streams entirely different from each other in the velocity distributions in the reactor, and the two streams are permitted to meet each other to form a composite stream, whereby as compared with a case of the single stream of the axial stream or the tangential stream only, the absolute value of $(I_K)_{min}$ and its region can be changed or controlled to a large extent, and with an addition of change or control of the conditions for the introduction of the hydrocarbon feedstock to such a control, it becomes possible to substantially change and control the physical properties of the resulting carbon black, such as the particle size, the particle size distribution, the aggregate size and the aggregate size distribution.

As the fuel for generating the high temperature combustion gas in the present invention, a gaseous fuel such as hydrogen, carbon monoxide, methane, natural gas, coal gas or petroleum gas; a petroleum-originated liquid fuel such as kerosine, gasoline or heavy oil; or a coal-originated fuel such as creosote oil, naphthalene oil or carbolic acid oil, may suitably be employed.

As the hydrocarbon feedstock in the present invention, an aromatic hydrocarbon such as benzene, toluene, xylene, naphthalene or anthrathene; a coal-originated hydrocarbon, such as creosote oil or carbolic acid oil; a petroleum-originated heavy oil such as ethylene heavy oil or FCC oil; an acetylene-type unsaturated hydrocarbon; an ethylene-type hydrocarbon; or an aliphatic hydrocarbon such as pentane or hexane, may suitably be employed.

Now, the present invention will be described in further detail with reference to practical embodiments of the carbon black production reactor of the present invention.

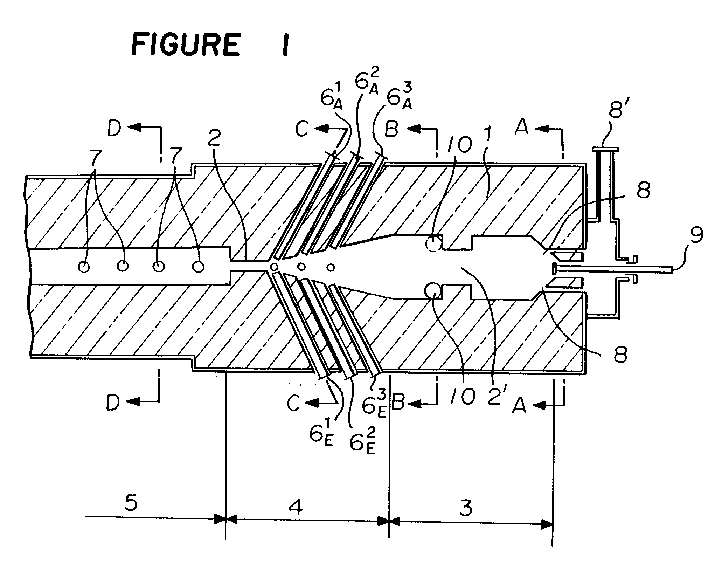

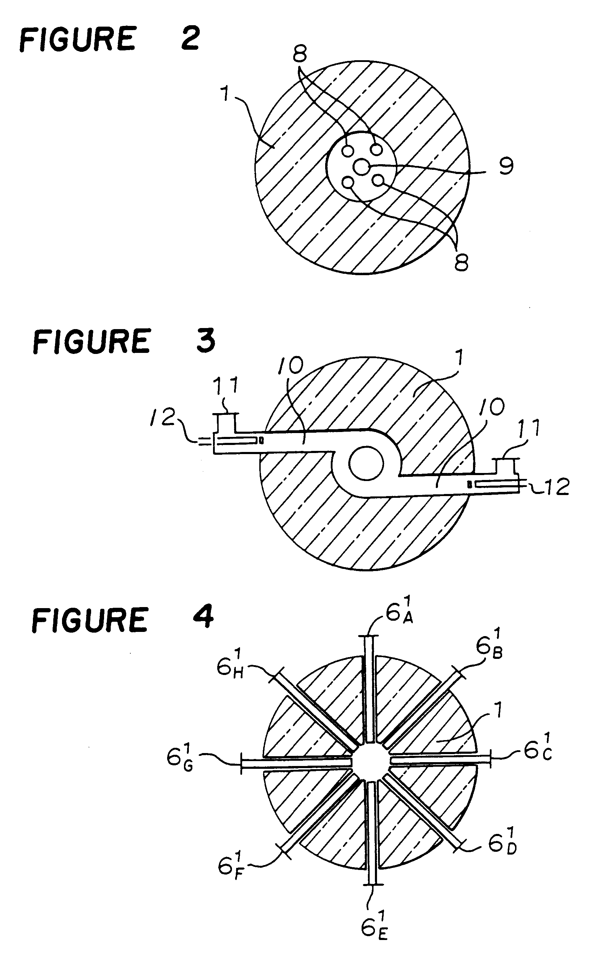

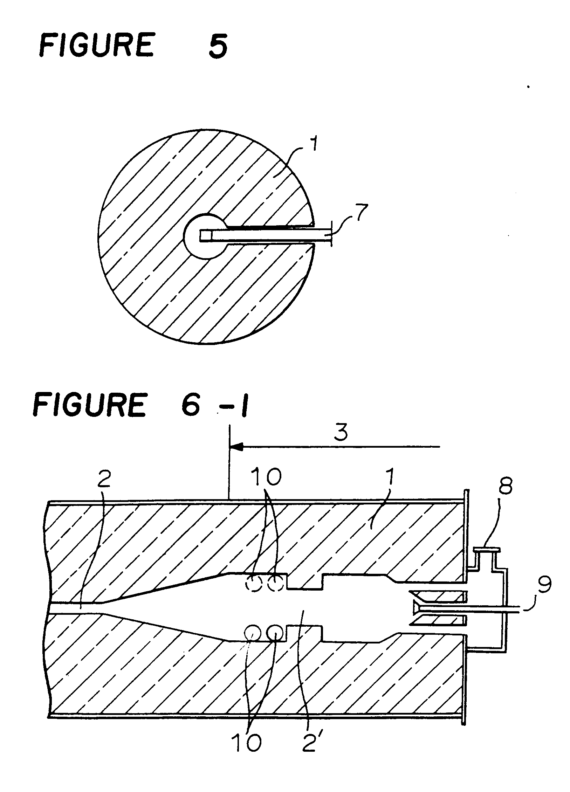

In the accompanying drawings, Figure 1 is a vertical cross sectional diagrammatical view of the main portion of an embodiment of the carbon black production reactor of the present invention; Figure 2 is a cross sectional view taken along line A-A in Figure 1; Figure 3 is a cross sectional view taken along line B-B in Figure 1; Figure 4 is a cross sectional view taken along line C-C in Figure 1; and Figure 5 is a cross sectional view taken along line D-D in Figure 1. Reference numeral 1 indicates the main body of the production reactor, numerals 2 and 2' indicate throats, numeral 3 indicates a first reaction zone, numeral 4 indicates a second reaction zone, numeral 5 indicates a third reaction zone, numeral 6 indicates a hydrocarbon feedstock supply nozzle, numeral 7 indicates a water spray for terminating the reaction, numeral 8 indicates an inlet for an oxygen-containing gas for the axial stream, numeral 8' indicates an entrance of the oxygen-containing gas for the axial stream, numeral 9 indicates a fuel nozzle for the axial stream, numeral 10 indicates a passage for a high temperature combustion gas for the tangential stream, numeral 11 is an inlet for the oxygen-containing gas for the tangential stream, and numeral 12 indicates a fuel nozzle for the tangential stream.

As shown in Figure 2, a total of four inlets 8 are provided for the oxygen-containing gas for the axial stream, while only one fuel nozzle 9 is provided for the axial stream. The gas or liquid fuel spouted from the nozzle 9 is mixed and burned with oxygen supplied from the inlets 8 to form an axial stream of the high temperature combustion gas.

On the other hand, as shown in Figure 3, a gas or liquid fuel spouted from the fuel nozzles 12 for the tangential stream, is burned with an oxygen-containing gas introduced from the inlets 11 for the oxygen-containing gas for the tangential stream and introduced via a passage 10 into the first reaction zone 3 to form a tangent flow of the high temperature combustion gas. The high temperature combustion gas axial stream and the high temperature combustion gas tangential stream thus formed and introduced into the first reaction zone 3 are permitted to meet in the first reaction zone or at an upstream of the second reaction zone to form a composite

EP 0 412 265 B1

stream. The axial stream and the tangential stream are independently controllable for the respective flow rates, so that the ratio of the flow rates of the two streams can optionally be adjusted.

In a preferred embodiment of the second reaction zone, the reactor wall is constructed to have a shape as shown in Figure 1 so that the second reaction zone 4 is gradually constricted in the axial direction of the reactor, and the hydrocarbon feedstock supply nozzles 6 are disposed at three stages of the upstream, the intermediate stream and the down stream in a direction substantially traversing the reactor axis of the second reaction zone, i.e. in a direction traversing the composite stream flowing in the second reaction zone from its side. As shown in Figure 4, eight nozzles 6 are disposed at each stage so that a total of 24 nozzles are provided. All of the nozzles 6 may be used for the introduction of the hydrocarbon feedstock. Otherwise, these nozzles may be suitably selected for use depending upon the desired physical properties or desired type (grade) of the carbon black to be prepared, and the flow rate of the hydrocarbon feedstock introduced can be adjusted for the respective nozzles (for example, for the respective stages) independently.

The reaction product obtained by conducting the reaction for the formation of carbon black by introducing the hydrocarbon feedstock from the nozzles 6 to the high temperature combustion gas composite stream in the second reaction zone, is then led via the throat 2 to the third reaction zone 5, where the reaction is terminated by quenching the product by water sprayed from the water spray 7 for terminating the reaction. Then, carbon black is recovered by a collecting apparatus such as a cyclone or a bagfilter, not shown in the drawings.

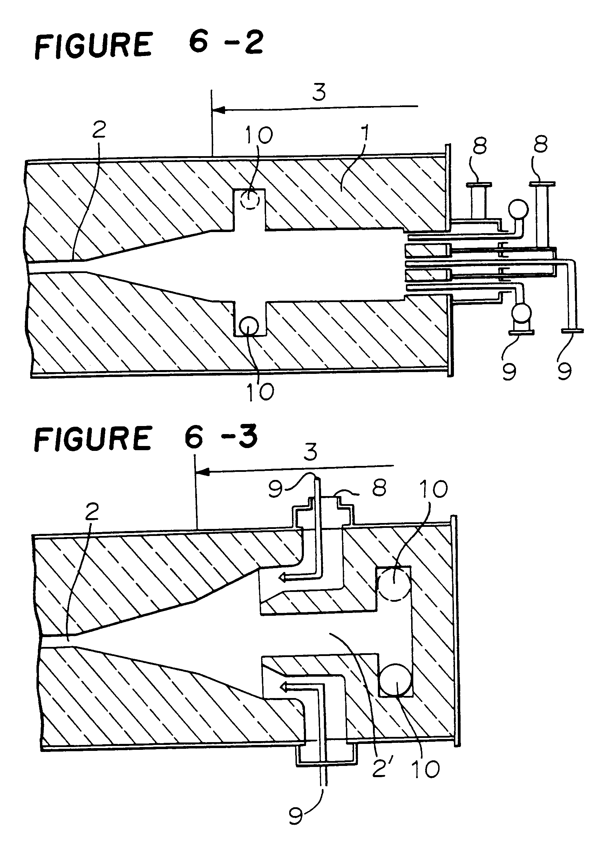

The carbon black production reactor illustrated in Figures 1 to 5 as described above, is one example of the carbon black production apparatus of the present invention. The present invention can be carried out in various other embodiments. For example, Figures 6-1 to 6-3 show other embodiments of the carbon black production apparatus of the present invention.

In the reactor shown in Figure 6-1, a pair of high temperature combustion gas passages 10 for the tangential stream are provided at two stages of the upstream and the down stream, as is different from the reactor shown in Figure 1.

In the reactor shown in Figure 6-2, the high temperature combustion gas for the tangential stream is introduced to down stream of the first reaction zone from a position with a larger diameter than the inlet diameter of the second reaction zone, and at the same time, the fuel nozzles 9 for the high temperature combustion gas for the axial stream are provided in a plurality inside and outside, and as is different from the reactor in Figure 1, a throat 2' is omitted.

In the reactor shown in Figure 6-3, as opposed to the reactor in Figure 1, it is constructed so that the axial stream is formed outside and the tangential stream is formed inside, and a plurality of fuel nozzles 9 for the axial stream are provided.

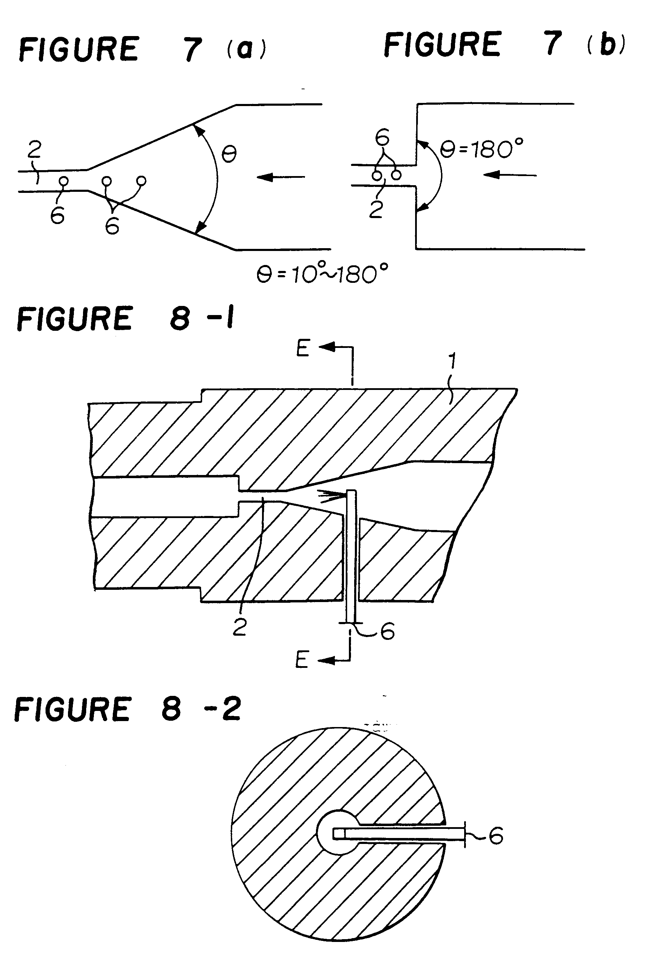

Figures 7(a) and 7(b) show two representative examples of the shape of the reactor wall for the purpose of illustrating the constricted shape of the reactor wall for the convergence of the reactor zone. As is apparent from the representative examples (a) and (b), the constriction angle $\theta$ may be selected optionally within a range of from 10 to 180°.

Figure 8-1 is a partial vertical cross sectional diagrammatical view of an embodiment wherein the hydrocarbon feedstock is introduced to the center of the reactor in the second reaction zone, and Figure 8-2 is a cross sectional view taken along line E-E in Figure 8-1. In this case, it is necessary to provide a cooling jacket or the like for the protection of the nozzle, to the portion of the nozzle 6 that is projected into the reactor.

Now, the present invention will be described in further detail with reference to Examples and Comparative Examples. However, it should be understood that the present invention is by no means restricted by such specific Examples.

The tests (measurements) of the physicochemical properties of carbon blacks disclosed in these Examples, were conducted by the following methods.

(1) Iodine adsorption

The iodine adsorption is measured in accordance with JIS K 6221-1982.

(2) DBP absorption

The DBP absorption is measured in accordance with JIS K 6221-1982. Here, DBP means dibutyl phthalate.

(3) Particle size and particle size distribution

Sample carbon black is put in chloroform and dispersed by irradiation with supersonic waves of 200 kHz for 20 minutes. Then, the dispersed sample is fixed on a support film. The fixed sample was observed by an

5

electron microscope, and the particle size by arithmetic mean and the standard deviation are calculated and represented by Å.

(4) Aggregate size and aggregate size distribution

Disk Centrifuge (manufactured by Joyce Loebl Company, UK) is used.

Five mg of carbon black as added to a 20% ethanol aqueous solution containing a small amount of a dispersant and completely dispersed by supersonic treatment. The rotary disk having 10 ml of a spinning liquid (water) injected, is adjusted to 8,000 ppm, and 0.5 ml of the above dispersion is injected. The turbidity detected by photo electric photometry is recorded by a histogram relative to the time. The most frequented particle size of the frequency distribution curve thereby obtained is represented by Å as the aggregate size ($D_{mod}$), and the half the width of the frequency distribution curve is represented by $m\mu m$ as the aggregate distribution (D1/2).

COMPARATIVE EXAMPLE 1

EXAMPLES 1 AND 2

A carbon black production reactor having the structure shown in Figures 1, 2, 3, 4 and 5, was used. The sizes of the main parts of this reactor were as follows:

(1) First reaction zone 3

Length: 1,000 mm
Maximum inner diameter: 450 mm

(2) Second reaction zone 4

Length: 1,150 mm
Inner diameter of throat 2: 90 mm
Hydrocarbon feedstock supply nozzles:
Two nozzles (6C' and 6G')

(3) Third reaction zone 5

Inner diameter: 245 mm
Water spray used: 1 spray

By using the above carbon black production reactor, the fuel as identified in the following Table 1 and the hydrocarbon feedstock as identified in the following Table 2, each carbon black was produced under the production conditions as identified in the following Table 3. The physicochemical properties of each carbon black thus obtained are shown in Table 3.

## Table 1

Type of the fuel: Coal gas

Composition (volume %):

| | |
|---|---|
| $CO_2$ | 2.0 |
| $O_2$ | 0.5 |
| $C_nH_m$ | 3.0 |
| CO | 6.6 |
| $H_2$ | 54.0 |
| $CH_4$ | 28.7 |
| $N_2$ | 5.2 |

## Table 2

Type of the Hydrocarbon feedstock:

Creosote oil

Specific gravity (15°C): 1.100

Carbon content (wt%): 90.5

Hydrogen content (wt%): 6.3

Viscosity (50°C): 10 cp

COMPARATIVE EXAMPLE 2

EXAMPLE 3

By using the same reactor as used in Examples 1 to 3 except that as the hydrocarbon feedstock supply nozzles, the nozzles shown in Figures 8-1 and 8-2 were used, carbon black was produced under the conditions as identified in Table 3. The physicochemical properties of each carbon black thus obtained are shown in Table 3.

Table 3

| | | Comparative Example 1 | Example 1 | Example 2 | Comparative Example 2 | Example 3 |
|---|---|---|---|---|---|---|
| Production conditions | Amount of air for combustion $(Nm^3/hr)$ | 1100 | 1100 | 1100 | 800 | 800 |
| | Amount of fuel $(Nm^3/Hr)$ | 180 | 180 | 180 | 133 | 133 |
| | Axial stream/tangential stream high temp. combustion gas amount ratio *1 | 1/0 | 7/4 | 5/6 | 1/0 | 3/7 |
| | Amount of hydrocarbon feedstock (kg/Hr) | 180 | 178 | 181 | 172 | 175 |
| | Hydrocarbon feedstock supply position *2 | 50 mm | 50 mm | 50 mm | 50 mm | 50 mm |
| Yield etc. | Amount of carbon black (kg/Hr) | 75.6 | 78.3 | 83.3 | 89.4 | 94.5 |
| | Yield of carbon black (%) | 42 | 44 | 46 | 52 | 54 |
| Properties of the resulting carbon black | Iodine adsorption (mg/g) | 196 | 197 | 193 | 75 | 73 |
| | DBP absorption (ml/100 g) | 78 | 77 | 78 | 119 | 117 |
| | Particle size (mμm) | 16 | 17 | 17 | 31 | 31 |
| | Particle size distribution (mμm) | 6.0 | 5.2 | 4.5 | 7.3 | 7.2 |
| | Aggregate size (mμm) | 52 | 50 | 46 | 138 | 101 |
| | Aggregate size distribution (mμm) | 51 | 47 | 38 | 168 | 88 |

*1: Ratio of (Amount of air for axial stream + Amount of fuel for axial strem)/
  (Amount of air for tangential stream + Amount of fuel for tangential stream)
*2: Distance from throat 2 to the hydrocarbon feedstock supply point.

EP 0 412 265 B1

As is evident from the comparison between Comparative Example 1 and Examples 1 and 2 in Table 1, although the particle sizes of the carbon blacks obtained in these Examples were substantially the same, in Examples 1 and 2, it was possible to produce carbon blacks having the particle size distributions remarkably different from Comparative Example 1, and the yields of the carbon blacks were remarkably higher in Examples 1 and 2 than in Comparative Example 1.

Further, as is evident from the comparison between Comparative Example 2 and Example 3, despite the particle sizes and the particle size distributions were substantially the same, in Example 3, it was possible to produce a carbon black substantially different in the aggregate size and the aggregate size distribution, and the yield of carbon black was substantially higher in Example 3 than in Comparative Example 2.

As described in the foregoing, according to the present invention, it is possible to optionally and easily control the physical properties of the resulting carbon black, particularly the particle size, the particle size distribution, the aggregate size and the aggregate size distribution, as the basic characteristics of the carbon black, and to produce carbon blacks having various physical properties depending upon the particular uses, in good yield.

## Claims

1. A process for producing carbon black by a reaction conducted in a first reaction zone in which by a high temperature combustion gas-generating system, an oxygen-containing gas and a fuel are mixed and burned to form a high temperature combustion gas stream, a second reaction zone having a throat in which a hydrocarbon feedstock is mixed to the high temperature combustion gas stream thus obtained, to form carbon black and a third reaction zone located down stream and continuous from the second reaction zone, in which quenching water is sprayed to terminate the reaction, which comprises:

    (i) introducing into the first reaction zone said high temperature combustion gas stream in the from of two types of high temperature combustion gas streams i.e. a stream in the direction of the reactor axis (axial stream) and a stream in the tangential direction (tangential stream), and letting the two gas stream meet each other in the first reaction zone to form a composite stream of the high temperature combustion gas; and

    (ii) in the second reaction zone, introducing the hydrocarbon feedstock to the composite stream of the high temperature combustion gas for reaction.

2. The process for producing carbon black according to Claim 1, wherein the second reaction zone is shaped so that it is axially gradually constricted, and the hydrocarbon feedstock is introduced to the composite stream of the high temperature combustion gas in a direction substantially traversing the reactor axis.

3. The process for producing carbon black according to Claim 1, wherein the flow rates of the axial stream and the tangential stream are controllable independently from each other.

4. An apparatus for producing carbon black, which comprises a first reaction zone in which by a high temperature combustion gas-generating system, an oxygen containing gas and a fuel are mixed to form a high temperature combustion gas stream, a second reaction zone having a throat in which a hydrocarbon feedstock is mixed to the high temperature combustion gas stream thus obtained, to form carbon black, and a third reaction zone located down stream and continuous from the second reaction zone, in which quenching water is sprayed to terminate the reaction, wherein as said high temperature combustion gas-generating system, two types of high temperature combustion gas-generating systems i.e. a high temperature combustion gas-generating system for a stream in the direction of the reactor axis (axial stream) and a high temperature combustion gas-generating system for a stream in the tangential direction (tangential stream), are provided, so that the high temperature combustion gas axial stream and the high temperature combustion gas tangential stream formed by the two high temperature combustion gas-generating systems meet each other in the first reaction zone, and nozzles for introducing the hydrocarbon feedstock are provided in the second reaction zone.

5. The apparatus for producing carbon black according to Claim 4, wherein the flow rates of the axial stream and the tangential stream are controllable independently from each other.

EP 0 412 265 B1

**Patentansprüche**

1. Verfahren zur Herstellung von Ruß durch eine Umsetzung, ausgeführt in einer ersten Reaktionszone, in der durch ein System, das ein eine hohe Temperatur aufweisendes Verbrennungsgas erzeugt, ein Sauerstoff-enthaltendes Gas und ein Brennstoff vermischt und verbrannt werden unter Herstellung eines eine hohe Temperatur aufweisenden Verbrennungsgasstroms, einer zweiten Reaktionszone mit einer Verengung, in der eine Kohlenwasserstoffbeschickung zu dem so erhaltenen eine hohe Temperatur aufweisenden Verbrennungsgasstrom unter Bildung von Ruß gemischt wird und einer dritten Reaktionszone, angeordnet stromabwärts und fortführend von der zweiten Reaktionszone, in die Löschwasser gesprüht wird, um die Reaktion zu beenden, umfassend:

   (i) Einführen in die erste Reaktionszone den eine hohe Temperatur aufweisenden Verbrennungsgasstrom in Form von zwei Arten von eine hohe Temperatur aufweisenden Verbrennungsgasströmen, nämlich einem Strom in Richtung der Reaktorachse (axialer Strom) und einem Strom in tangentialer Richtung (tangentialer Strom) und Zusammentreffenlassen der zwei Gasströme miteinander in der ersten Reaktionszone unter Bildung eines Verbundstromes des eine hohe Temperatur aufweisenden Verbrennungsgases und

   (ii) in der zweiten Reaktionszone, Einführen der Kohlenwasserstoffbeschickung zu dem Verbundstrom des eine hohe Temperatur aufweisenden Verbrennungsgases zur Umsetzung.

2. Verfahren zur Herstellung von Ruß nach Anspruch 1, wobei die zweite Reaktionszone derart ausgebildet ist, daß sie sich axial allmählich verengt und die Kohlenwasserstoffbeschickung in den Verbundstrom des eine hohe Temperatur aufweisenden Gases in einer Richtung im wesentlichen quer zur Reaktorachse eingeführt wird.

3. Verfahren zur Herstellung von Ruß nach Anspruch 1, wobei die Fließgeschwindigkeiten des axialen Stroms und des tangentialen Stroms unabhängig voneinander regelbar sind.

4. Vorrichtung zur Herstellung von Ruß, umfassend eine erste Reaktionszone, in der durch ein System, das ein eine hohe Temperatur aufweisendes Verbrennungsgas erzeugt, ein Sauerstoff-enthaltendes Gas und ein Brennstoff vermischt werden unter Bildung eines eine hohe Temperatur aufweisenden Gasstromes, eine zweite Reaktionszone mit einer Verengung, worin eine Kohlenwasserstoffbeschickung zu dem so erhaltenen eine hohe Temperatur aufweisenden Verbrennungsgasstrom gemischt wird unter Bildung von Ruß, und eine dritte Reaktionszone, angeordnet stromabwärts und fortführend von der zweiten Reaktionszone, in der Löschwasser zur Beendigung der Reaktion eingesprüht wird, wobei als System, das ein eine hohe Temperatur aufweisendes Verbrennungsgas erzeugt, in zwei Formen von Systemen bereitgestellt werden, die ein eine hohe Temperatur aufweisendes Gas erzeugen, nämlich einem System, das ein eine hohe Temperatur aufweisendes Verbrennungsgas erzeugt für einen Strom in Richtung der Reaktorachse (axialer Strom) und einem System, das ein eine hohe Temperatur aufweisendes Verbrennungsgas für einen Strom in tangentialer Richtung (tangentialer Strom) erzeugt, derart ausgelegt, daß der axiale eine hohe Temperatur aufweisende Verbrennungsgasstrom und der tagentiale eine hohe Temperatur aufweisende Verbrennungsgasstrom, die jeweils durch die zwei Systeme, die ein eine hohe Temperatur aufweisendes Verbrennungsgas erzeugen, gebildet werden, miteinander in der ersten Reaktionszone zusammentreffen und Düsen zur Einführung einer Kohlenwasserstoffbeschickung in der zweiten Reaktionszone vorliegen.

5. Vorrichtung zur Herstellung von Ruß nach Anspruch 4, wobei die Fließgeschwindigkeit des axialen Stroms und des tangentialen Stroms unabhängig voneinander regelbar sind.

**Revendications**

1. Procédé pour produire du noir de carbone par une réaction mise en oeuvre dans une première zone de réaction, dans laquelle, grâce à un système produisant un gaz de combustion à haute température, on mélange et on brûle un gaz contenant de l'oxygène et un combustible pour former un courant de gaz de combustion à haute température, une deuxième zone de réaction comportant un étranglement dans lequel une charge hydrocarbonée est mélangée au courant de gaz de combustion à haute température ainsi obtenu, pour former du noir de carbone et une troisième zone de réaction située en aval de la deuxième zone de réaction, et prolongeant cette dernière, dans laquelle on pulvérise de l'eau de refroidissement

10

pour mettre fin à la réaction, qui comprend les opérations consistant :

(i) à introduire dans la première zone de réaction le courant de gaz de combustion à haute température sous forme de deux types de courants de gaz de combustion à haute température, à savoir un courant dans la direction de l'axe du réacteur (courant axial) et un courant dans la direction tangentielle (courant tangentiel), et à laisser les deux courants de gaz se rencontrer l'un l'autre dans la première zone de réaction pour former un courant composite de gaz de combustion à haute température ; et

(ii) dans la deuxième zone de réaction, à introduire la charge hydrocarbonée dans le courant composite du gaz de combustion à haute température pour assurer la réaction.

2. Procédé pour produire un noir de carbone selon la revendication 1, dans lequel la deuxième zone de réaction a une forme correspondant à un rétrécissement progressif dans le sens axial, et la charge hydrocarbonée est introduite dans le courant composite du gaz de combustion à haute température dans une direction essentiellement transversale par rapport à l'axe du réacteur.

3. Procédé pour produire un noir de carbone selon la revendication 1, dans lequel on peut agir, indépendamment l'un de l'autre, sur le débit du courant axial et sur le débit du courant tangentiel.

4. Appareil pour produire du noir de carbone, qui comprend une première zone de réaction, dans laquelle, grâce à un système de production de gaz de combustion à haute température, on mélange un gaz contenant de l'oxygène et un combustible pour former un courant de gaz de combustion à haute température, une deuxième zone de réaction ayant un étranglement dans laquelle une charge hydrocarbonée est mélangée au courant de gaz de combustion à haute température ainsi obtenu, pour former du noir de carbone, et une troisième zone de réaction située en aval et dans le prolongement de la deuxième zone de réaction, troisième zone de réaction dans laquelle on pulvérise de l'eau de refroidissement pour mettre fin à la réaction, appareil dans lequel on utilise, en tant que système de production de gaz de combustion à haute température, deux types de systèmes de production de gaz de combustion à haute température, à savoir un système de production d'un gaz de combustion à haute température pour un courant dirigé selon l'axe du réacteur (courant axial) et un système de production d'un gaz de combustion à haute température pour un courant dirigé dans le sens tangentiel (courant tangentiel), de façon que le courant axial de gaz de combustion à haute température et le courant tangentiel de gaz de combustion à haute température formés par les deux systèmes de production de gaz de combustion à haute température, se rencontrent l'un l'autre dans la première zone de réaction, et des buses pour introduire la charge hydrocarbonée sont prévues dans la deuxième zone de réaction.

5. Appareil pour produire un noir de carbone selon la revendication 4, dans lequel on peut agir, indépendamment l'un de l'autre, sur le débit du courant axial et sur le débit du courant tangentiel.

# FIGURE 1

EP 0 412 265 B1

FIGURE 2

FIGURE 3

FIGURE 4

# FIGURE 5

# FIGURE 6 -1

FIGURE 6 -2

FIGURE 6 -3

## FIGURE 7 (a)

$\theta$

$\theta = 10° \sim 180°$

## FIGURE 7 (b)

$\theta = 180°$

## FIGURE 8 -1

E

## FIGURE 8 -2